# FASCICULE DE BREVET EUROPEEN

(11) **EP 1 951 460 B1**
(45) Date de publication et mention de la délivrance du brevet: **12.01.2011**
(21) Numéro de dépôt: 06831112.5
(22) Date de dépôt: 14.11.2006
(51) Int. Cl.: B22F 9/24, C01B 3/00, C10G 2/00, C10G 35/085, C10G 45/00, C10G 45/40, C10G 45/52, B01J 23/40, B01J 23/74, B01J 37/02, B01J 37/16

(54) **PROCEDE DE SYNTHESE EN PRESENCE DE REDUCTEUR D'UN CATALYSEUR A BASE DE NANOPARTICULES METALLIQUES ANISOTROPES**
VERFAHREN ZUR SYNTHESE EINES KATALYSATORS AUF GRUNDLAGE ANISOTROPISCHER METALL-NANOTEILCHEN UNTER VERWENDUNG EINES REDUZIERENDEN WIRKSTOFFS
METHOD FOR THE SYNTHESIS OF A CATALYST BASED ON ANISOTROPIC METAL NANOPARTICLES, IN THE PRESENCE OF A REDUCING AGENT

(30) Priorité: 14.11.2005 FR 0511523
(43) Date de publication de la demande: 06.08.2008
(73) Titulaire: Institut Français du Pétrole, 92852 Rueil Malmaison Cedex (FR)
(72) Inventeur: THOMAZEAU, Cécile, F-69530 Brignais (FR); UZIO, Denis, F-69220 Belleville (FR); BEHAULT, Gilles, F-69008 Lyon (FR); VERDON, Catherine, F-78160 Marly le Roi (FR); HARBUZARU, Bogdan, F-69007 Lyon (FR)
(86) Numéro de dépôt international: PCT/FR2006/002512
(87) Numéro de publication internationale: WO 2007/057553

(56) Documents cités:
- FR-A- 2 782 280
- FR-A- 2 874 514
- FR-A- 2 874 515
- US-A- 3 992 512
- US-A- 4 425 261
- US-A- 5 147 841
- US-A- 6 074 979
- US-A1- 2003 232 721
- US-B1- 6 197 720

## Description

### Domaine de l'invention

La présente invention concerne un procédé de préparation de nanoparticules métalliques anisotropes, en particulier déposées sur un support. Les dites particules sont utilisables en catalyse, en particulier catalyse hétérogène.

### Art antérieur

Les métaux, en particulier les métaux de transition, sont utilisés depuis de nombreuses années pour leur capacité à activer un certain nombre de molécules comme les hydrocarbures, l'hydrogène, l'oxygène ou encore le monoxyde de carbone. Les propriétés catalytiques des métaux vis-à-vis de ces molécules ont fait l'objet d'un nombre important de travaux qui ont permis de mettre en évidence leur versatilité en fonction du métal, des conditions de mise en oeuvre mais aussi de leurs caractéristiques physico-chimiques.

Les phénomènes d'activation par chimisorption, c'est à dire les phénomènes régis par l'adsorption des réactifs et les interactions chimiques entre lesdits réactifs et la particule métallique, dépendent des propriétés physico-chimiques des surfaces métalliques exposées. La taille de la particule métallique et la coordinence des atomes en surface de cette particule sont deux caractéristiques à prendre en compte pour obtenir des catalyseurs ayant des propriétés chimisorptives optimales, c'est à dire des catalyseurs ayant une aptitude à adsorber les réactifs, et à interagir chimiquement avec lesdits réactifs.

En ce qui concerne la taille de la particule métallique, celle-ci est généralement choisie en fonction de l'application visée.

Il est connu que les nanoparticules métalliques sont susceptibles d'adopter des formes stables différentes en fonction du nombre d'atomes qui les composent ou des interactions chimiques avec leur environnement, c'est à dire par exemple avec l'atmosphère réactionnelle. Les particules métalliques mises en oeuvre en catalyse hétérogène présentent des morphologies ayant un caractère isotrope marqué, adoptant des formes géométriques qui dépendent du nombre d'atomes constituant la particule. Parmi ces formes géométriques, on peut citer la forme icosaèdre, pour des petites particules de taille généralement inférieure à environ 10 Angstrom (1 Angstrom = 10⁻¹⁰m), et la forme cubooctaèdre tronqué pour des particules plus grandes.

Un objet de l'invention est de fournir une méthode de synthèse d'un catalyseur à base de nanoparticules métalliques, déposées sur un support ou non, permettant de contrôler la forme de ces nanoparticules, et notamment permettant de préparer des nanoparticules, supportées ou non, présentant une morphologie anisotrope, c'est à dire présentant un facteur de forme moyen, F, inférieur à 1.

Un certain nombre de méthodes de synthèse de nanoparticules sont déjà bien connues de l'homme du métier.

A titre d'exemple, on peut citer les procédés lithographiques et les techniques de croissance en phase vapeur.

Les méthodes de synthèse de nanoparticules anisotropes mettant en oeuvre des gabarits ou des matrices sont aussi connues de l'homme du métier. Dans ces méthodes, le matériau est généré in situ à l'intérieur de la matrice et acquiert une morphologie complémentaire de celle du gabarit. Les canaux nanométriques de la matrice sont remplis avec une solution ou un sol-gel, ou bien en utilisant un processus électrochimique. Une réduction est ensuite nécessaire pour former les nanoparticules à l'intérieur de la matrice. Le rendement insuffisant en nanoparticules anisotropes et la nécessité d'éliminer la matrice sans détériorer lesdites nanoparticules sont des inconvénients de ces techniques.

Il est également connu de l'homme du métier des méthodes de synthèse de nanoparticules en solution dans un milieu organique, par exemple dans de l'alcool ou dans du polyol, dans lesquelles la croissance des nanoparticules peut être contrôlée par adsorption d'agent sélectif en une seule étape. Une réduction est généralement réalisée à reflux, c'est à dire à la température d'ébullition du milieu organique, et la phase organique sert à la fois de solvant pour l'agent d'adsorption sélectif, généralement un polymère, et de réducteur pour le précurseur métallique. Ces méthodes sont décrites dans « Y. Sun, Y. Xia, Advanced Materials, 2002, 14, 833-837 ». Elles présentent l'inconvénient d'utiliser des composés organiques faiblement réducteurs qui doivent être activés à température élevée. Les rendements obtenus sont relativement faibles. De plus, les paramètres opératoires permettant un contrôle des formes des nanoparticules sont peu nombreux. Il s'agit principalement de la température dans une gamme relativement étroite, du rapport entre les concentrations en agent d'adsorption sélective et du précurseur métallique. De surcroît, le contrôle des phases de germination puis de croissance des particules est difficile à réaliser.

Parmi les méthodes de synthèse en solution dans un milieu organique, certaines d'entre elles permettent un contrôle de la croissance des nanoparticules métalliques en choisissant un précurseur du métal considéré possédant des ligands favorisant la réduction et la croissance selon une direction donnée. Dans ces méthodes de synthèse, une décomposition de ces précurseurs organométalliques est mise en oeuvre comme cela est décrit dans « Chaudret et al., C.R. Chimie, 6, 2003, 1019-1034 ». A titre d'exemple, on peut citer l'emploi de ligands thiophénols ou hexadécylamine pour la synthèse de nanotubes et nanofils de platine respectivement, comme cela est décrit dans « Gomez et al., Chem. Comm. 2001, 1474 ».

Outre les méthodes de synthèse en solution dans un milieu organique, il existe également des méthodes de synthèse dans un milieu aqueux. Par milieu aqueux, on entend un milieu comprenant au moins une phase aqueuse majoritaire et éventuellement une phase organique. La présente invention relève, plus particulièrement, du domaine de ces méthodes de synthèse dans un milieu aqueux.

Il est connu d'utiliser des méthodes de synthèse en milieu aqueux avec surfactant pour la préparation de catalyseurs possédant des nanoparticules isotropes. Ainsi, l'article référencé « B. Veisz and Z. Kirali, Langmuir, 2003, 19, 4817-» décrit la synthèse de nanoparticules isotropes de palladium de forme cubooctahédrique. Le brevet américain US 4,714,693 décrit, quant à lui, une méthode de synthèse de nanoparticules supportées par formation puis dépôt et réduction de micelles en interaction avec le précurseur métallique.

Comme alternative aux méthodes de synthèse utilisant des surfactants, il est également connu de synthétiser des nanoparticules anisotropes en milieu aqueux par adsorption sélective d'ions, molécules ou polymères sur certaines faces cristallines du métal. Un contrôle de la morphologie par addition d'ions halogénures a ainsi été observé par Filamkenbo et al. (J. Phys. Chem. B, 2003, 107, 7492). Ces méthodes de synthèse sont mises en oeuvre uniquement sur du cuivre, de l'argent ou de l'or.

Dans le domaine des méthodes de synthèse en milieu aqueux par adsorption sélective de polymères sur certaines faces cristallines du métal, le brevet américain US 6,090,858 décrit une méthode utilisée pour produire des nanoparticules colloïdales d'un métal de transition, présentant des formes particulières, à l'aide d'un agent de stabilisation, ladite méthode comprenant une mise en solution aqueuse d'un mélange d'un précurseur métallique et d'un agent de stabilisation suivie d'une réduction en présence d'un seul réducteur, l'hydrogène.

Cette approche de croissance contrôlée peut être obtenue également en synthétisant dans un premier temps des nanoparticules isotropes ou des nanoparticules présentant un caractère anisotrope peu marqué, lesdites nanoparticules étant ensuite utilisées comme germes de croissance en présence d'un agent d'adsorption sélective et d'un réducteur approprié. Cette approche, dans laquelle deux composés réducteurs sont mis en oeuvre, a ainsi permis de synthétiser des nanoparticules anisotropes d'argent et d'or comme cela est décrit dans « Busbee et al., Advanced Materials, 2003, 15, 414-».

US-6,074,979 décrit un procédé de préparation de nanoparticules de diamètre de 1 à 8 nm (col. 5,1. 39-46 ; col.5, 161-65 ; col. 6, 1. 1-26 ; col. 7, 1. 39-50 ; col. 8, 1. 14-24), comprenant du palladium seul ou avec un ou des métaux des groupes 8-11, dans lequel la solution du composé de palladium est mise au contact d'un réducteur, et si plus d'un métal est utilisé, il est possible de réduire les métaux successivement avec le même réducteur ou un réducteur différent. La solution obtenue est déposée sur un support.

### Résumé de l'invention

Il a été trouvé un procédé de préparation de nanoparticules anisotropes de métaux des colonnes 8 à 10 de la classification périodique des éléments, ladite méthode permettant d'obtenir un meilleur contrôle de la morphologie.

L'invention concerne un procédé de préparation de nanoparticules métalliques présentant un caractère anisotrope, voire un caractère anisotrope marqué par la mise en oeuvre de deux réducteurs différents, et de préférence ayant des pouvoirs réducteurs différents, sur une source d'un métal choisi dans les colonnes 8, 9 ou 10 de la classification périodique des éléments.

Plus précisément, l'invention concerne un procédé de préparation de nanoparticules métalliques anisotropes comportant la mise en oeuvre de 2 réducteurs différents sur une source d'au moins un métal choisi dans les colonnes 8, 9 ou 10 de la classification périodique des éléments, tel que défini dans la revendication 1.

La méthode de synthèse trouvée permet de produire des nanoparticules anisotropes présentant un caractère anisotrope marqué, c'est à dire présentant un facteur de forme moyen, F, inférieur à 0,7, de manière plus préférée inférieur à 0,5, par exemple à 0,25.

Ledit facteur de forme étant défini par la formule F= (4*Π*S)/P², S et P étant mesurés par microscopie électronique à transmission, S étant la surface de la particule mesurée dans un plan de caractérisation, P étant le périmètre de la particule mesuré dans ce même plan, et dans lequel ledit support présente une porosité non ordonnée. Le facteur de forme peut être calculé à partir de mesures réalisées par microscopie électronique selon les méthodes décrites dans « Coster, M, Chermant, J.L., Précis d'analyse d'images, Eds CNRS, 1985 ». Le facteur de forme moyen, F, est déterminé par analyse statistique en respectant les règles de comptage statistique connues de l'homme du métier.

Les nanoparticules peuvent avoir des tailles de quelques angströms à quelques centaines de nanomètres. La taille moyenne (c'est à dire la taille selon la plus grande dimension des particules) des nanoparticules est comprise entre à 10 et 500nm, ou encore 10 à 200nm , ou de 10 à 120nm. On a pu constater de façon surprenante que des tailles supérieures à 10nm conduisaient, de façon inattendue, à de bonnes performances catalytiques.

Ces nanoparticules peuvent être isolées entre elles ou former des réseaux, comme, par exemple, des enchevêtrements de fils, des structures fractales, ou des mousses métalliques.

La suspension contenant les nanoparticules anisotropes obtenues par le procédé selon l'invention, les nanoparticules , sous forme solide et séparées du liquide, et le support comprenant des nanoparticules métalliques anisotropes tels que définis ci-dessus sont utilisables comme catalyseurs.

L'invention concerne en outre, les applications des solides décrits ci-dessus pour la séparation ou l'adsorption de molécules, le stockage de gaz.

Le catalyseur peut être utilisé pour la transformation catalytique de molécules organiques , en particulier, il est utilisé pour le reformage catalytique des hydrocarbures, l'hydrogénation totale ou sélective, la déshydrocyclisation, la déshydrogénation des hydrocarbures, la synthèse Fischer-Tropsch, ou l'oxydation totale ou sélective du monoxyde de carbone.

### Brève description des Figures

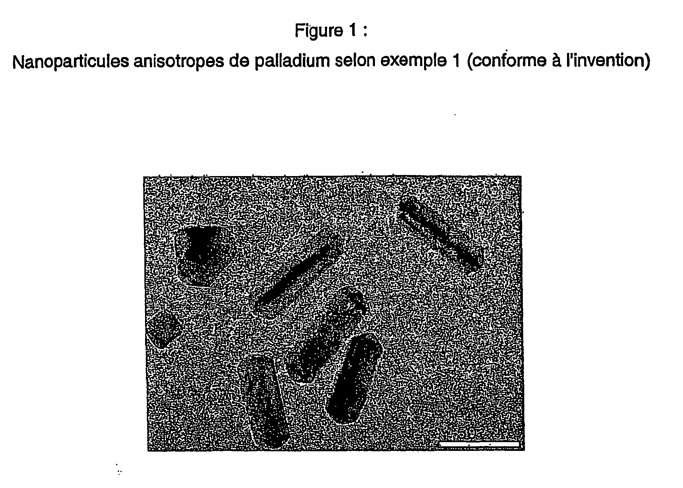

La Figure 1 représente, de manière non limitative, une photographie par microscopie électronique de nanoparticules anisotropes de palladium obtenues selon l'exemple 1.

### Description détaillée de invention

### Métaux et sources de métaux (colonnes 8, 9 ou 10)

Le métal des nanoparticules produites est choisi parmi les métaux appartenant aux colonnes 8, 9 et 10 de la classification périodique. De préférence, le métal des nanoparticules produites est choisi parmi le nickel, le cobalt, le fer, le ruthénium, le platine, le palladium, l'iridium et de préférence, le cobalt, le nickel, le platine, le palladium. Contrairement à l'or, l'argent ou le cuivre, qui ont par nature une forte aptitude à la réduction, il a été trouvé que les métaux listés précédemment pouvaient, de façon surprenante, être mis en oeuvre dans la méthode de synthèse de l'invention.

La nanoparticule métallique anisotrope peut comporter un seul élément métallique ou plusieurs éléments métalliques. Dans le cas de nanoparticules comportant plusieurs éléments métalliques, ces derniers peuvent être associés de n'importe quelle façon connue de l'homme du métier. Il peut s'agir d'un mélange quelconque, tel qu'un alliage, une solution solide ou n'importe quelle structure comportant un coeur et/ou une coquille.

La méthode de l'invention permet également de produire un catalyseur à base de nanoparticules de plusieurs métaux. Ainsi, par nanoparticules d'un métal choisi dans les colonnes 8 à 10, on entend nanoparticules d'au moins un métal choisi dans lesdites colonnes.

La source de métal peut être tout sel d'un précurseur du métal considéré présentant un degré d'oxydation du métal supérieur à 0. Ce sel peut être un simple halogénure ou oxyde ou hydroxyde du métal considéré ou alors un sel associant un halogénure avec un composé alcalin, alcalino-terreux, un groupement amine ou ammoniac. Ce sel peut être également un nitrate, nitrite ou sulfate du métal considéré seul ou en association avec une fonction amine. Ce sel peut aussi comporter au moins un ligand organique.

Par exemple, on pourra utiliser comme source de palladium, le chlorure de palladium, le bromure de palladium, l'iodure de palladium, l'hexachloropalladate de potassium, l'hexachloropalladate d'ammonium, le tétrabromopalladate de potassium, le tétrachloropalladate de potassium, le tétrachloropalladate d'ammonium, l'hexachloropalladate de sodium, le tétrachloropalladate de sodium, le nitrate de palladium, le nitrite de palladium, le nitrite de diaminepalladium, le sulfate de palladium, le nitrate de tétraaminepalladium, le dichlorodiamine palladium, l'acétate de palladium, l'acétylacétonate de palladium.

La teneur en source de métal dans la solution soumise à une étape de réduction peut être comprise entre 10⁻⁵ et 1 mole/litre, de préférence entre 5 10⁻⁵ et 10⁻¹ mole/litre, et de manière plus préférée entre 10⁻⁴ et 10⁻² mole/litre.

### Deux réducteurs différents R1 et R2

Selon l'invention, on ajoute un second réducteur R2 différent de R1. Par réducteurs différents, on entend des réducteurs ayant des pouvoirs réducteurs différents.

Le réducteur R1 présente un pouvoir réducteur supérieur au réducteur R2.

Les réducteurs employés peuvent être de nature inorganique ou de nature organique. De préférence, les réducteurs (R1 et R2) sont choisis dans le groupe constitué par :
- l'hydrogène, l'hydrazine, les hydroxylamines, les hydrures et borohydrures alcalins, pour les réducteurs inorganiques, et
- les acides carboxyliques, alcools, polyols, aldéhydes, cétones et leurs ions pour les réducteurs organiques.

De manière plus préférée :
- on choisit le composé réducteur R1 dans le groupe constitué par l'hydrogène, l'hydrazine, les hydroxylamines, les hydrures et les borohydrures, et/ou
- on choisit le composé réducteur R2 dans le groupe constitué par les acides carboxyliques, les alcools, les polyols, les aldéhydes, les cétones et leurs ions.

L'ajout de chacun des réducteurs R1 et R2, lors des étapes a) et b), est avantageusement réalisé sous agitation, chaque réducteur pouvant être ajouté conjointement ou séparément de manière progressive.

De préférence, si le réducteur R2 présente une fonction protonée (acide carboxylique, alcool...), lors de l'étape b), on ajoute une base. De manière plus préférée, la base ajoutée lors de l'étape b) est de la soude. L'ajout de la soude permet, d'obtenir l'anion correspondant par déprotonation, ce dernier présentant un pouvoir réducteur plus fort. De préférence la base est (de preference la soude) en quantité équimolaire par rapport au réducteur.

De préférence, lors de l'étape b), on ajoute un sel inorganique. Ceci permet de contrôler l'interaction entre l'agent de croissance et la nanoparticule anisotrope en formation.

Ce sel pourra être tout type de composé inorganique comprenant des anions halogénures tel que du chlorure, du bromure, du fluorure, des nitrates, des nitrites, ou des sulfates. De préférence, le sel inorganique ajouté à l'étape b) est choisi dans le groupe constitué par les halogénures d'alcalins et les alcalino-terreux.

La quantité de sel inorganique rajoutée est généralement comprise entre 10⁻⁴ et 0,5, de préférence entre 5 10⁻⁴ et 0,1, de manière plus préférée entre 10⁻³ et 0,05 mole/litre du volume total de la solution soumise à l'étape b).

### Ajout d'au moins un agent de stabilisation (optionnel)

De préférence, on ajoute au moins un agent de stabilisation à au moins l'une des solutions en contact avec un des réducteurs.

Ainsi, l'agent de stabilisation peut être ajouté dans la solution de la source de métal, ou dans la solution de l'étape a2) avant contact avec R2 ou est présent pour l'étape b).

Généralement, cet agent de stabilisation est au moins présent pour réaliser l'étape b). Dans le cas d'une méthode en une étape de réduction, cet agent de stabilisation est généralement ajouté dans la solution obtenue préalablement à l'introduction de R2.

L'agent de stabilisation peut être, de préférence, un surfactant, un agent complexant et plus généralement tout composé pouvant jouer le rôle de stabilisant ou de complexant.

Dans la méthode de l'invention, il est possible d'utiliser un ou plusieurs agents de stabilisation, pouvant être mis en oeuvre simultanément ou successivement. La teneur en agent de stabilisation dans la solution soumise à une étape de réduction peut être comprise entre 10⁻⁴ et 2 mole/litre.

Dans un cas, au moins un agent de stabilisation peut être un surfactant. Par surfactant, on entend tout composé organique présentant une fonction polaire hydrophile et une chaîne hydrocarbonée hydrophobe. Quand le surfactant est utilisé comme stabilisant, sa teneur dans la solution aqueuse soumise à une étape de réduction est généralement en fort excès par rapport à la teneur en source de métal.

Avantageusement, le surfactant peut être tout composé de formule générale Rx(R'y)3(X)zYd dans laquelle :
- x et y sont compris entre 0 et 4,
- z et d sont compris entre 0 et 2,
- R est une chaîne hydrocarbonée comprenant entre 1 et 25 atomes de carbone, de préférence entre 8 et 18,
- R' est tout groupement aliphatique, aromatique ou hétéroaromatique connu de l'homme du métier,
- X est un élément cationique pris dans le groupe des alcalins, alcalino-terreux ou un groupement ammoniacal, et
- Y est un élément anionique tel qu'un halogénure, nitrate, nitrite ou sulfate.

Dans le cas où un surfactant est utilisé comme agent de stabilisation, il est possible d'utiliser, en outre, un cosurfactant.

Dans un autre cas, au moins un agent de stabilisation peut être un agent complexant. L'agent complexant, quant à lui, peut être :
- tout composé organique présentant une fonction carbonyle, par exemple tout composé comportant un groupement citrate, acétate, acétylacétonate, des polymères tel que le polyvinylpyrolidone, des acides gras ou carboxyliques tels que l'acide oléïque,
- tout composé organique présentant une fonction amine, préférentiellement une amine aliphatique comme l'hexadécylamine,
- tout composé organique présentant une fonction phosphine, par exemple triphenylphosphine ou oxyde de trioctylphosphine,
- tout composé organique présentant une fonction thiol, par exemple octanethiol ou dodécanethiol,
- agents chelatants
- tout composé organique présentant une fonction thiophénol, diphosphite, alcools, ainsi que
- toute autre combinaison associant plusieurs des fonctions listées ci-dessus.

L'introduction de l'agent stabilisant peut être réalisée par n'importe quel moyen connu de l'homme du métier.

De préférence, on procède ainsi :
- dissolutions séparées de l'agent de stabilisation, d'une part, et de la source de métal, d'autre part,
- suivies du mélange d'au moins une partie desdites solutions.

Cela permet un meilleur contrôle de la dissolution du surfactant, ce qui induit une auto organisation plus importante aux voisinages des micelles.

### Les étapes de réduction

Les réducteurs R1 et R2 sont introduits séparément de manière à réaliser deux étapes de réduction séparées.

Les réducteurs R1 et R2 sont introduits séparément de manière à réaliser deux étapes de réductions distinctes. Dans une première étape a), on produit, par réduction d'une source de métal à l'aide d'un premier réducteur R1, des germes de nanoparticules ne présentant pas de caractère anisotrope marqué, c'est à dire présentant un facteur de forme supérieur à 0,7. Cette étape peut être qualifiée d'étape de germination. Ces germes de nanoparticules peuvent être supportées ou non. Dans une deuxième étape, généralement qualifiée d'étape de croissance, on forme des nanoparticules, supportées ou non, par réduction d'une source de métal à l'aide d'un deuxième réducteur R2, en présence des germes préparés à l'étape a).

Dans les étapes a1)+b) ou a2)+b) , l'étape b) est réalisée après l'étape a), dans un procédé dit "deux étapes" , en introduisant le réducteur R2 après formation de germes de nanoparticules métalliques.

Les températures auxquelles s'effectuent les étapes a) et b) sont généralement comprises entre la température ambiante et moins de 100°C, le plus souvent inférieures à 70°C.

Dans le cas où un agent de stabilisation est utilisé, l'étape de réduction est généralement réalisée à une température pour laquelle l'agent de stabilisation reste stable en solution. A titre d'exemple, dans le cas où l'agent de stabilisation est du bromure de cetyltrimethylammonium, celui-ci est maintenu pendant l'étape de réduction à une température minimum de 30 °C afin d'éviter la cristallisation de cet agent de stabilisation.

Le procédé selon l'invention opère avec 2 étapes de réduction sur une source d'un métal des colonnes 8, 9 ou 10 selon les modes suivants :

### Mode 1 :

a2 + b) + éventuellement c), c'est à dire :
   a2) mise en contact d'une solution aqueuse comprenant une source d'au moins un métal choisi dans les colonnes 8, 9 ou 10 avec un réducteur R1,
   b) une étape de formation des nanoparticules métalliques anisotropes par contact de la solution obtenue à l'étape a2) avec un réducteur R2 différent du réducteur R1
   c) éventuel dépôt des nanoparticules métalliques anisotropes sur un support.

Il est obtenu à l'issue de l'étape b) des nanoparticules métalliques anisotropes en suspension.

Comme expliqué précédemment, les réducteurs R1 et R2 sont introduits successivement (R2 étant alors introduit après formation des germes).

### Mode 2 :

a1 + b), c'est à dire :
   a1) imprégnation d'un support par une solution aqueuse comprenant une source d'au moins un métal choisi dans les colonnes 8, 9 ou 10 de la classification périodique des éléments, puis mise en contact dudit support avec un réducteur R1,
   b) une étape de formation des nanoparticules métalliques anisotropes par contact du support obtenu à l'étape a1) avec un réducteur R2 différent du réducteur R1

Il est préparé dans l'étape a1) un support imprégné (de préférence à sec) avec l'élément des colonnes 8, 9 10 qui est mis ensuite en contact avec au moins un réducteur R1.

Il peut être mis en contact avec R1 pour former lesdits germes, puis avec R2 pour obtenir les nanoparticules anisotropes par croissance desdits germes.

### Le support, l'imprégnation et l'obtention des matériaux du catalyseur

De préférence, le support est un oxyde de texture non ordonnée. Par support présentant une texture non ordonnée, on entend généralement un support ne présente pas de propriété structurale particulière ,de texture à géométrie particulière, de mésostructurations (c'est à dire les supports présentant une texture ordonnée à l'échelle des pores).

Le support est généralement à base d'au moins un oxyde réfractaire choisi parmi l'alumine, la silice, une silice alumine, l'oxyde de magnésium, l'oxyde de zirconium, l'oxyde de thorium, ou l'oxyde de titane, pris seul ou en mélange entre eux. De préférence, le support est l'alumine, la silice, ou la silice alumine.

Le support peut également être un charbon, un silico-aluminate, une argile ou tout autre composé connu pour être utilisé comme support tel que défini dans l'invention.

De préférence, le support présente une surface BET comprise entre 5 et 300 m²/g.

Le support peut être utilisé sous forme de poudre, ou être mis en forme de billes, d'extrudés, de trilobes, de poudre ou de monolithe.

Sur ce support, les nanoparticules anisotropes peuvent être isolées entre elles ou former des réseaux, comme, par exemple, des enchevêtrements de fils, des structures fractales, ou des mousses métalliques.

L'étape de dépôt des éléments des colonnes 8 à 10 ou des nanoparticules à la surface du support peut être réalisée par n'importe quel moyen connu de l'homme du métier, et avantageusement par imprégnation à sec.

Dans un mode c1), après les étapes a2)+b) de formation des nanoparticules métalliques anisotropes non supportées (en suspension) , ces dernières peuvent être séparées du liquide par tout moyen connu de l'homme du métier. A titre d'exemple, ces moyens peuvent inclure une centrifugation, par exemple, à 5000 tours/minute pendant 45 minutes. Elles sont éventuellement lavées, séchées à une température inférieure ou égale à 120°C, de préférence inférieure ou égale à 80°C, ou encore à 50°C sous atmosphère inerte ou sous air. Il est ainsi obtenu un solide essentiellement constitué de nanoparticules métalliques.

Selon un mode c2), les nanoparticules métalliques anisotropes non supportées obtenues lors de l'étape b) sont déposées sur un support par imprégnation, et avantageusement par imprégnation à sec.

L'étape de dépôt peut avoir lieu à partir de la solution obtenue à l'étape b) ou par remise en suspension des nanoparticules métalliques obtenues à l'étape c1) (en quantité correspondant aux teneurs souhaitées pour le matériau ou la suspension à utiliser) et une mise en contact de la dite solution avec un support.

Après l'imprégnation, le support est séparé de l'éventuel liquide résiduel par filtration, séché à une température inférieure ou égale à 120°C (de préférence inférieure ou égale à 80°C ou encore à 50°C) sous atmosphère inerte ou sous air.

Pour la préparation "directe" des particules supportées selon l'étape a1), on sépare le support de l'éventuel solution résiduelle, on sèche à une température inférieure ou égale à 120°C (de préférence inférieure ou égale à 80°C ou encore à 50°C) sous atmosphère inerte ou sous air.

Avantageusement, le solide obtenu obtenu est soumis à un traitement d'activation sous atmosphère réductrice, à une température inférieure à 600°C, de préférence inférieure à 400°C, ou encore inférieure à 100°C, voire à 80°C ou 50°C.

Lorsque d'autres éléments sont ajoutés au matériau supporté, ce traitement peut avoir lieu avant lesdits ajouts ou après lesdits ajouts .Ainsi on s'assure que la phase métallique est correctement activée.

La suspension de particules non supportées peut également être soumise audit traitement.

D'une façon générale, on peut introduire au niveau du support au moins un élément choisi dans le groupe formé par :
- les éléments de la colonne 13 de la classification périodique,
- les éléments de la colonne 14 de la classification périodique,
- les métaux alcalins, de préférence le lithium, le sodium ou le potassium, et/ou les alcalino-terreux, de préférence le magnésium, le calcium, le strontium ou le baryum, et/ou
- les halogènes
- les éléments de la colonne 11

On introduit généralement ces éléments par imprégnation après le dépôt des nanoparticules sur le support.

L'ajout éventuel d'au moins un métal alcalin et/ou d'au moins un alcalino-terreux peut être réalisé de manière à obtenir une teneur en métaux alcalins et/ou en alcalino-terreux dans le catalyseur comprise entre 0 et 20 % en poids, de préférence entre 0 et 10 % en poids, de manière plus préférée entre 0,01 et 5 % en poids.

L'ajout éventuel d'au moins un halogène peut être réalisé de manière à obtenir une teneur en halogènes dans le catalyseur comprise entre 0 et 0,2 % en poids.

Selon l'invention, de façon très avantageuse, on soumet le solide ou la suspension obtenu à un traitement d'activation par l'hydrogène, à une température inférieure à 600°C, de préférence inférieure à 400°C, ou à 100°C, de préférence inférieure à 80°C ou mieux à 50°C. Lorsque d'autres éléments sont ajoutés au matériau supporté, ce traitement peut avoir lieu avant lesdits ajouts ou après lesdits ajouts.

### Les produits obtenus

L'invention permet donc de produire des matériaux solides contenant des nanoparticules métalliques anisotropes, ainsi que des suspensions contenant lesdites particules.

Dans ces matériaux ou suspension, généralement au moins 50 % en poids, de préférence au moins 70 % en poids, de manière encore plus préférée au moins 90 % en poids des métaux des groupes 8 à 10 est sous forme de nanoparticules métalliques anisotropes.

A titre d'exemple, les nanoparticules obtenues par la méthode de l'invention peuvent présenter une morphologie de type bâtonnets, fils, voire une morphologie tubulaire, tubes pleins ou creux. Les nanoparticules métalliques du catalyseur obtenu par la méthode de l'invention peuvent également présenter une morphologie cylindrique que l'on peut définir par un ratio longueur sur largeur. Dans ce cas, le ratio longueur sur largeur peut être égal à 5 ou 10, ce qui correspond à un facteur de forme respectivement égal à environ 0,43 et 0,25.

Dans le cas d'un matériau (en particulier utilisé comme catalyseur), en particulier à base de nanoparticules supportées, la teneur en métal des groupes 8 à 10 est de préférence comprise entre 0,01 et 50 % en poids, de préférence entre 0,01 et 35 % en poids. Généralement, et en particulier pour l'utilisation comme catalyseur, le procédé selon l'invention est applicable pour les teneurs en métaux habituellement utilisées.

### Utilisation des produits obtenus

Les nanoparticules métalliques anisotropes et les produits les contenant (tels que les suspensions ou matériaux solides décrits précédemment) produits obtenus par le procédé selon l'invention peuvent avantageusement être utilisés comme catalyseurs.

Les matériaux solides comprenant un support et des nanoparticules métalliques anisotropes obtenues par le procédé selon l'invention peuvent être également utilisés comme absorbants ou dans des membranes de séparation. Ainsi l'invention concerne également un procédé pour la séparation ou l'adsorption de molécules, le stockage de gaz avec lesdits matériaux.

De manière plus préférée, le catalyseur (de préférence sous forme supportée) obtenu par la méthode de l'invention est utilisé pour la transformation catalytique de molécules organiques. De telles utilisations sont généralement rencontrées dans le domaine du raffinage et de la pétrochimie.

Ce sont par exemple le reformage catalytique des hydrocarbures, l'hydrogénation totale ou sélective, la déshydrocyclisation, la déshydrogénation des hydrocarbures, la synthèse Fischer-Tropsch, ou l'oxydation totale ou sélective du monoxyde de carbone.

Les catalyseurs peuvent être utilisés , pour tous les procédés cités de transformation catalytique de molécules organiques, dans les conditions opératoires, et avec les charges à traiter qui sont celles des procédés classiques. On donnera ci-après quelques indications.

Les utilisations en séparation peuvent mettre en oeuvre des membranes métalliques denses utilisant les propriétés intrinsèques de certains métaux, comme la dissolution et la diffusion de molécules, telles que l'hydrogène ou l'oxygène, dans leur réseau métallique et permettent ainsi la purification de flux gazeux, comme cela est décrit dans la demande de brevet japonais JP2002153740.

Ainsi par exemple une unité de purification par membrane sera opérée à une température comprise entre 300°C et 600°C, et à une pression comprise entre 0,6 et 2 MPa relatifs pour séparer un l'effluent gazeux qui est de l'hydrogène de très haute pureté généralement supérieure à 95% et préférentiellement supérieure à 99%.

Les utilisations liées au stockage de gaz, tel que l'hydrogène, peuvent également faire appel à des systèmes métalliques utilisant les capacités d'adsorption de formulations multimétalliques, comme décrit dans la demande de brevet internationale WO2004027102. Le stockage d'hydrogène peut être effectué à une pression en H2 comprise entre 0 et 10 atms, à une température comprise entre 0 et 100°C.

Le reformage catalytique des hydrocarbures est généralement destiné à produire un carburant à fort indice d'octane en utilisant des catalyseurs à base de platine, comme cela est décrit dans le brevet américain US 5,562,817 ou . US6315892). Le catalyseur peut être également utilisé pour la production d'hydrocarbures aromatiques.

La temperature est généralement entre 400° C. and 600° C, de preférence 480° C. à 580° C.. et la pression entre 0.1 et 3.5 MPa ,de préférence 0.2 and 1.8 MPa, pour une vitesse spatiale de 0.1 and 10 volumes de charge liquide par volume de catalyseur, avec un ratio H2 / hydrocarbures entre 1 et 20, de préférence 1 à 6.

L'hydrogénation sélective est généralement destiné à purifier les effluents d'un vapocraqueur ou d'un craquage catalytique en utilisant des catalyseurs à base de palladium comme cela est décrit dans « W.K. Lam, L. LLoyd, Oil & Gas Journal, p. 66-70, mars 1972 ». On pourra se référer aux conditions d'utilisation du brevet EP0899012 poou l'hydrogénation sélective des dioléfines ou des acétyléniques.

Les conditions généralement utilisées pour ce type de transformations sont une température moyenne comprise entre 25 et 200 °C, une pression comprise entre 0,1 et 10 MPa et un rapport molaire hydrogène sur hydrocarbures compris entre 1 et 150.

Pour l'hydrogénation totale ( EP0899012) d'hydrocarbures comportant des fonctions alcynes, dièniques ou oléfiniques, ou aromatiques, on opère à une température moyenne comprise entre 10 et 400 °C et sous une pression comprise entre 0,1 et 10 MPa.

La synthèse Fischer-Tropsch est destinée à produire des hydrocarbures supérieurs à partir d'un gaz de synthèse comportant du monoxyde de carbone et de l'hydrogène.

On pourra se référer à US6214890. Généralement , la conversion du syngas a lieu sous 0.1-15MPa, 150-350°C, 100-20000 volume de gaz / volume de catalyseur et par heure, avec une charge ayant un ratio H2/CO=1.2 à 2.5; le procédé pouvant être mis en oeuvre en lit fixe ou en slurry.

Les réactions d'oxydation du monoxyde de carbone ont pour but de purifier les effluents gazeux contenant du monoxyde de carbone, en présence éventuellement d'autres composés comme l'hydrogène. Par exemple, on se référera à FR2867464.

La réaction d'oxydation totale du CO peut être opérée à haute température comprise entre 350°C et 550°C, La pression totale de l'unité de conversion du CO à haute température sera comprise entre 0,6 et 2 MPa relatifs.

La réaction d'oxydation du CO peut être opérée à basse température comprise entre 180°C et 260°C. La pression totale de la section de conversion du CO à basse température sera comprise entre 0,6 et 2 MPa relatifs.

La réaction d'oxydation sélective du CO est effectuée pour des pressions totales comprises entre Pression atmosphérique et 50 bars, de façon préférée entre pression atmosphérique et 20 bars, de façon encore plus préférée entre pression atmosphérique et 10 bars. La température est comprise entre 20 et 200°C, de façon préférée entre 50 et 150°C, de façon encore plus préférée entre 70 et 130°C. Le ratio molaire CO/O2 est comprise entre 0.5 et 5, de façon préférée entre 1 et 4. Le ratio pondéral CO:H2 est compris entre 0.5:50 et 5:50, de façon préféré entre 1:50 et 3:50.

La deshydrocyclisation ( EP1252259) a lieu généralement sous des pressions de 0,1 à 4 MPa ( de préférence 0,3-0,8 MPa pour le reformage régénératif et pour le procédé de production d'aromatiques, 0.02-2 MPa pour la désydrogénation des paraffines C3-C22), 300-800°C (de préférence 400-700°C et de préférence 480-600 °C pour le reformage régénératif et pour le procédé de production d'aromatiques; 400-550°C pour la désydrogénation des paraffines C3-C22), des vitesses spatiales de 0,1 à 10 h-1 et de préférence 1-4 h-1 et avec des ratios H2/hydrocarbures variables ( hydrogène recyclé / hydrocarbures (mol.) de 0,1 à 10 et de préférence 3-10, et plus particulièrement de 3-4 dans le premier réacteur utilisé pour le reformage régénératif et 4-6 pour le procédé de production d'aromatiques; H2/hydrocarbures de 10-100 litre d'hydrocarbures par litre de catalyseur et par heure pour la désydrogénation des paraffines C3-C22).

### Exemples :

La méthode de production de nanoparticules selon l'invention est illustrée dans les exemples suivants. Les performances des catalyseurs comportant des nanoparticules obtenues directement par la méthode de l'invention sont comparées à celles des catalyseurs obtenus par des méthodes de l'art antérieur. Ces exemples présentent un caractère illustratif ne limitant pas la portée de l'invention.

La morphologie des nanoparticules des catalyseurs mis en oeuvre dans le cadre de ces exemples ont fait l'objet d'une caractérisation par Microscopie Electronique en Transmission. Le microscope électronique utilisé était le modèle Jeol 2010© commercialisé par la société JEOL Ce modèle de microscope présente une tension d'accélération de 200 kV, une résolution spatiale de 0,2 nm et une limite de détection des particules métalliques supportées de l'ordre de 0,7 nm.

Le facteur de forme F est déterminé en utilisant le logiciel de traitement d'images IMAGIST© développé par « Image Processing and Analysis, Princeton Gamma Tech ».

Avant de réaliser la caractérisation par microscopie électronique, les échantillons de catalyseur ont été préparés en suivant une procédure incluant une mise en solution dans l'éthanol, le dépôt d'une goutte de solution sur la grille d'analyse, le séchage et l'introduction de ladite grille dans le microscope.

### Exemple 1 : Synthèse de nanoparticules anisotropes de palladium supportées (Catalyseur A. conforme à invention selon le mode de réalisation a2)

Dans un premier temps, 25 mL d'une solution aqueuse de bromure de cétyltriméthylammonium de concentration 0,3 mol/L ont été ajoutés à une solution aqueuse de 50 mL de Na₂PdCl₄.3H2O de concentration 5.10⁻⁴ mol/L. Sous agitation, 6 mL d'une solution aqueuse de borohydrure de sodium de concentration 0,01 mol/L ont alors été ajoutés goutte à goutte. Après 10 minutes sous agitation, la solution de nanoparticules a ainsi préparée a été laissée au repos 2 heures.

Dans un second temps, 50 mL d'une solution aqueuse de bromure de cétyltriméthylammonium de concentration 0,08 mol/L ont été ajoutés à une solution aqueuse de 50 mL de Na₂PdCl₄.3H2O de concentration 10⁻³ mol/L. 700 µL d'une solution d'acide ascorbique de concentration 0,08 mol/L ont alors été ajoutés goutte à goutte, ainsi que 112 µL de NaOH 0,5 N. A cette solution dénommée B, 60 µL de solution A ont alors été ajoutés. La solution est devenue noire au bout de 1 heure. Les nanoparticules anisotropiques ainsi formées présentent 60 % de bâtonnets (facteur de forme < 0,7), 15 % de polyèdres, 10 % de tétraèdres et 15 % de cubes. les nanoparticules ainsi formées présentent un facteur de forme moyen F égal à 0,54. Une photographie par microscopie électronique de ces nanoparticules est donnée à la Figure 1.

Après centrifugation, les nanoparticules anisotropes de palladium obtenues ont été déposées sur une alumine. Le catalyseur a été ensuite séché une nuit à 30°C. Le catalyseur A ainsi préparé contient 0,3% pds de Palladium.

### Exemple 2 Synthèse de nanoparticules anisotropes de platine supportées (Catalyseur B, non conforme à l'invention)

Dans un premier temps, 25 mL d'une solution aqueuse de bromure de cétyltriméthylammonium de concentration 0,3 mol/L ont été ajoutés à une solution aqueuse de 50 mL de Pt(NH₃)₄(OH)₂ de concentration 5.10⁻⁴ mol/L. Sous agitation, 12 mL d'une solution aqueuse de borohydrure de sodium de concentration 0,01 mol/L ont alors été ajoutés goutte à goutte. Après 10 minutes sous agitation, la solution de nanoparticules B1 ainsi préparée a été laissée au repos 2 heures.

Dans un second temps, 1 mL de la solution B1 a été déposé sur une alumine. Le catalyseur a été ensuite séché une nuit à 30°C. Le catalyseur B2 ainsi obtenu a été ensuite mis au contact, sous agitation, avec une solution aqueuse B3 contenant 50 mL de bromure de cétyltriméthylammonium de concentration 0,24 mol/L et 50 mL de Pt(NH₃)₄(OH)₂ de concentration 3.10⁻³ mol/L. 14 mL d'acide ascorbique de concentration 0,08 mol/L ont alors été ajoutés goutte à goutte ainsi que 336 µL de NaOH 0,5 N. La solution est devenue sombre au bout de 2 heures.

Les nanoparticules anisotropiques supportées sur alumine ainsi formées présentent 50 % de bâtonnets (facteur de forme < 0,7), 25 % de polyèdres, 20 % de tétraèdres et 5 % de cubes. Le facteur de forme moyen F des nanoparticules supportées est égal à 0,50.

Le catalyseur a été ensuite séché une nuit à 30°C. Le catalyseur B ainsi préparé contient 0.3% pds de platine.

### Exemple 3 Synthèse de nanoparticules anisotropes de cobalt supportées (Catalyseur C, conforme à l'invention selon le mode de réalisation a2)

25 mL d'une solution aqueuse de bromure de cétyltriméthylammonium de concentration 0,3 mol/L ont été ajoutés à une solution aqueuse de 50 mL de Co(NO₃)₂ de concentration 5.10⁻⁴ mol/L. Sous agitation, 12 mL d'une solution aqueuse de borohydrure de sodium de concentration 0,01 mol/L ont alors été ajoutés goutte à goutte. Après 10 minutes sous agitation, une solution C1 est obtenue. A cette solution, une solution aqueuse C2 contenant 50 mL de Co(NO₃)₂ de concentration 10⁻³ mol/L, 50 mL de bromure de cétyltriméthylammonium de concentration 0,08 mol/L, 5 mL d'acide ascorbique de concentration 0,08 mol/L ainsi que 2 mL de NaOH 0,5 N a alors été ajoutée. La solution ainsi obtenue est devenue sombre au bout de 2 heures.

Après centrifugation, les nanoparticules anisotropes de cobalt ont été déposées sur une alumine.

Les nanoparticules anisotropiques supportées sur alumine ainsi formées présentent 65 % de bâtonnets (facteur de forme < 0,7), 15 % de polyèdres, 10 % de tétraèdres et 10 % de cubes. Le facteur de forme moyen F est de 0,55.

Le catalyseur a été ensuite séché une nuit à 30°C. Le catalyseur C ainsi préparé contient 5 % pds de cobalt.

### Exemple 4 : Synthèse de nanoparticules isotropes de palladium supportées sur alumine (Catalyseur D, non conforme à l'invention)

Un catalyseur Pd supporté sur alumine contenant des particules de Pd isotropes a été préparé par imprégnation en excès d'une solution de toluène contenant le précurseur Pd(acac)₂. Le catalyseur a été ensuite séché une nuit à 120°C et calciné sous air à 350°C pendant 2 h.

Le catalyseur D ainsi préparé contient 0,3% pds de Palladium. La taille des particules supportées est comprise entre 2 et 5 nm, leur morphologie observée en microscopie électronique à transmission est de type sphérique, avec un facteur de forme F égal à 1.

### Exemple 5 : Synthèse de nanoparticules isotropes de platine supportées sur alumine (Catalyseur E, non conforme à l'invention)

Un catalyseur au platine supporté sur alumine contenant des particules de platine isotropes a été préparé par imprégnation en excès d'une solution de toluène contenant le précurseur Pt(acac)₂. Le catalyseur a été ensuite séché une nuit à 120°C et calciné sous air à 350°C pendant 2 h.

Le catalyseur E ainsi préparé contient 0,3% pds de Pt. La taille des particules supportées est comprise entre 2 et 5 nm, leur morphologie observée en microscopie électronique à transmission est de type sphérique, avec un facteur de forme F égal à 1.

### Exemple 6 : Synthèse de nanoparticules isotropes de cobalt supportées sur alumine (catalyseur F, non conforme à l'invention)

Un catalyseur à base de cobalt supporté sur une alumine comportant des particules de cobalt isotropes a été préparé par imprégnation à sec d'une solution de Co(NO₃)₂, séchage pendant une nuit à 120 °C et calcination à 200 °C.

Le catalyseur F ainsi préparé comporte 5 % en poids de cobalt. La taille des particules est comprise entre 3 et 9 nm avec une morphologie de type sphérique, avec un facteur de forme moyen, F, égal à 1.

### Exemple 7 : Synthèse de nanoparticules anisotropes de palladium supportées (Catalyseur G, conforme à l'invention selon mode de réalisation a1)

Dans un premier temps, 50 ml d'une solution de nitrate de palladium sont préparés par dilution de 1.3 g d'une solution de nitrate de palladium contenant 7.8% poids de palladium. Par ailleurs, 50 ml d'une solution de soude sont préparés par dilution de 7.5 ml de soude 1 N. La solution de nitrate de palladium est ajoutée à la solution de soude. Le pH de la solution obtenue est de 13. Cette solution est ensuite imprégnée sur une alumine. Le solide G1 obtenu est ensuite séché à 120°C pendant une nuit, calciné à 200°C, réduit sous hydrogène à 150°C pendant 2 heures.

Ce solide G1 est ensuite transféré à l'abri de l'air, à température ambiante, dans 300 ml d'une solution aqueuse contenant 0.3 g de tetrachloropalladate de sodium, 26.4 g de bromure de cetyltriméthylammonium, 0.96 g d'acide ascorbique. Le pH est amené à 11 par ajout de soude 5N. Cette solution est maintenue sous agitation pendant 24 heures.

La solution est filtrée. Le catalyseur G ainsi préparé est séché une nuit à 30°C. Il contient 0.3% de Pd. Les nanoparticules anisotropiques ainsi formées présentent 70 % de bâtonnets, 20 % de polyèdres, 10 % de cubes. les nanoparticules ainsi formées présentent un facteur de forme moyen F égal à 0,45.

### Exemple 8 : Synthèse de nanoparticules anisotropes de palladium supportées (Catalyseur H, art antérieur)

Dans un premier temps, 25 mL d'une solution aqueuse de bromure de cétyltriméthylammonium de concentration 0,3 mol/L ont été ajoutés à une solution aqueuse de 50 mL de K2PdCl4 de concentration 5.10-4 mol/L. Sous agitation, 12 mL d'une solution aqueuse de borohydrure de sodium de concentration 0,01 mol/L ont alors été ajoutés goutte à goutte. Après 10 minutes sous agitation, la solution de nanoparticules H1 ainsi préparée a été laissée au repos 2 heures.

Dans un second temps, 1 mL de la solution H1 a été déposé sur une alumine. Le catalyseur a été ensuite séché une nuit à 30°C. Le catalyseur H2 ainsi obtenu a été ensuite mis au contact, sous agitation, avec une solution aqueuse H3 contenant 50 mL de bromure de cétyltriméthylammonium de concentration 0,24 mol/L et 50 mL de K2PdCl4 de concentration 3.10-3 mol/L. 14 mL d'acide ascorbique de concentration 0,08 mol/L ont alors été ajoutés goutte à goutte ainsi que 336 µL de NaOH 0,5 N. La solution est devenue sombre au bout de 10 mins.

Les nanoparticules anisotropiques supportées sur alumine ainsi formées présentent 40 % de bâtonnets (facteur de forme < 0,7), 35 % de polyèdres, 10 % de tétraèdres et 15 % de cubes. Le facteur de forme moyen F des nanoparticules supportées est égal à 0.64.

Le catalyseur a été ensuite séché une nuit à 30°C. Le catalyseur H ainsi préparé contient 0.3% pds de palladium.

### Exemple 9 Synthèse de nanoparticules anisotropes de platine supportées (Catalyseur I, conforme à l'invention selon mode de réalisation a2)

Dans un premier temps, 25 mL d'une solution aqueuse de bromure de cétyltriméthylammonium de concentration 0,3 moi/L ont été ajoutés à une solution aqueuse de 50 mL de K₂PtCl₄.3H2O de concentration 5.10⁻⁴ mol/L. Sous agitation, 6 mL d'une solution aqueuse de borohydrure de sodium de concentration 0,01 mol/L ont alors été ajoutés goutte à goutte. Après 10 minutes sous agitation, la solution A de nanoparticules a ainsi préparée a été laissée au repos 2 heures.

Dans un second temps, 50 mL d'une solution aqueuse de bromure de cétyltriméthylammonium de concentration 0,08 mol/L ont été ajoutés à une solution aqueuse de 50 mL de K₂PtCl₄.3H2O de concentration 10⁻³ mol/L. 700 µL d'une solution d'acide ascorbique de concentration 0,08 mol/L ont alors été ajoutés goutte à goutte, ainsi que 112 µL de NaOH 0,5 N. A cette solution dénommée B, 60 µL de solution A ont alors été ajoutés. La solution est devenue noire au bout de 6 heures.

Les nanoparticules anisotropiques ainsi formées présentent 65 % de bâtonnets (facteur de forme < 0,7), 25 % de polyèdres, 5 % de tétraèdres et 5 % de cubes. les nanoparticules ainsi formées présentent un facteur de forme moyen F égal à 0,47. Une photographie par microscopie électronique de ces nanoparticules est donnée à la Figure 1.

Après centrifugation, les nanoparticules anisotropes de platine obtenues ont été déposées sur une alumine. Le catalyseur a été ensuite séché une nuit à 30°C. Le catalyseur 1 ainsi préparé contient 0,3% pds de Platine.

### Exemple 10 : Test catalytique en hydrogénation du 1,3-butadiène

L'hydrogénation du 1,3-butadiène a été réalisée en phase liquide (n-heptane) dans un réacteur discontinu parfaitement agité de type « Grignard » sous une pression constante de 2 MPa d'hydrogène et une température thermostatée de 17°C. Les produits de la réaction ont été analysés par chromatographie en phase gazeuse. Les activités catalytiques, exprimées en mole de H₂ par minute et par gramme de métal, ont été déterminées par le suivi de la chute de pression. Ces activités sont reportées au tableau 1. Les sélectivités en 1-butène ont été mesurées à 80% de conversion du 1,3-butadiène. Avant test, les catalyseurs A, B, G, H, I ont préalablement été traités sous hydrogène à 50°C. Le catalyseur D est préalablement traité sous hydrogène à 200°C. Le catalyseur E est préalablement traité sous hydrogène à 550°C.

**Tableau 1: Activités et sélectivités mesurées en hydrogénation du 1,3-butadiène**

| | Activité mol/min/gmétal | Sélectivité 1-butène |
|---|---|---|
| Catalyseur A - Pd | 3,5 | 60 |
| Catalyseur G - Pd | 6.5 | 57 |
| Catalyseur H - Pd | 3.0 | 60 |
| Catalyseur D - Pd | 2,5 | 60 |
| Catalyseur I - Pt | 1.7 | 63 |
| Catalyseur B - Pt | 1,2 | 63 |
| Catalyseur E - Pt | 0,57 | 60 |

Les catalyseurs A et G dont les particules métalliques présentent un facteur de forme moyen F respectivement égal à 0,54 et 0.45 possèdent une activité catalytique en hydrogénation du 1,3-butadiène (exprimée par gramme de palladium) supérieure à celles du catalyseur D qui présente des particules métalliques isotropes avec un facteur de forme F égal à 1 et à celle du catalyseur H qui présente des particules anisotropes ayant un facteur de forme moyen F égal à 0.64.

Les catalyseur B et I dont les particules métalliques présentent un facteur de forme moyen F respectivement égal à 0,50 et 0.47 possèdent une activité catalytique en hydrogénation du 1,3-butadiène (exprimée par gramme de platine) et une sélectivité en 1-butène supérieures à celles du catalyseur E qui présente des particules métalliques isotropes avec un facteur de forme F égal à 1.

### Exemple 11 : Test catalytique en conversion du gaz de synthèse

La réaction de conversion du gaz de synthèse a été mise en oeuvre dans un réacteur continu en lit fixe, sous une pression constante de 2 MPa d'hydrogène et une température de 220 °C. La vitesse volumique horaire a été maintenue à environ 1500 h-1 et le rapport molaire H₂/CO a été maintenu à 2.

Les activités catalytiques exprimées en termes de conversion du monoxyde de carbone sont reportées dans le Tableau 2 ci-dessous. Préalablement au test catalytique, le catalyseur C est traité sous hydrogène à 100°C, le catalyseur F est traité sous hydrogène à 400°C.

**Tableau 2 : Activités et sélectivités mesurées en conversion du gaz de synthèse en hydrocarbures**

| | Conversion CO % | Rendement en hydrocarbures > C₅ % | % CH₄ |
|---|---|---|---|
| Catalyseur C | 31 | 69 | 9 |
| Catalyseur F | 32 | 54 | 14 |

Pour une même conversion en monoxyde de carbone, le catalyseur C, dont les particules métalliques présentent un facteur de forme moyen F égal à 0,55, possède une sélectivité plus élevée en hydrocarbures lourds que celle observée pour le catalyseur F, dont les particules métalliques sont isotropes avec un facteur de forme moyen F égal à 1.

### Exemple 12 : Test catalytique en transformation d'une coupe pétrolière (reformage catalytique)

La réaction de reformage catalytique a été réalisée, en présence d'hydrogène (rapport molaire H2/charge = 5), dans un réacteur continu à lit fixe, sur une coupe pétrolière dont les caractéristiques sont les suivantes :
- masse volumique à 20°C : 0,75 kg/dm3
- indice d'octane recherche : 60
- teneur en paraffines : 51 %
- teneur en naphtènes : 36 %
- teneur en aromatiques : 13 %

Les conditions expérimentales mises en oeuvre ont été les suivantes :
- une pression totale de 0,3 MPa,
- une température de 500 °C, et
- un débit de charge de 3 kg/kg de catalyseur.

Au cours du test, la température a progressivement été ajustée pour maintenir l'indice d'octane constant. Préalablement au test catalytique, le catalyseur B est traité sous hydrogène à 100°C, le catalyseur E est traité sous hydrogène à 550°C. Les performances catalytiques obtenues, après 10 heures de fonctionnement, sont reportées tableau 3 ci-dessous.

**Tableau 3 : Activités et sélectivités mesurées en reformage catalytique**

| | Indice Octane recherché | Rendement en réformat (% poids) | Rendement en aromatiques (% poids) |
|---|---|---|---|
| Catalyseur B | 102 | 92 | 74 |
| Catalyseur E | 102 | 92 | 72 |

Le catalyseur B, dont les particules métalliques présentent un facteur de forme moyen F égal à 0,50, permet d'améliorer le rendement en aromatiques par rapport au catalyseur E présentant des particules métalliques isotropes.

### Exemple 13 : Test catalytique en deshydrogénation de paraffines C10 à C14

La réaction de déshydrogénation des paraffines C10 à C14 a été réalisée dans un réacteur à lit traversé, à 450 °C, sous une pression de 0,29 MPa, avec un rapport molaire hydrogène sur hydrocarbures de 6, une WH de 20 h-1. Un apport de 2000 ppm d'eau a été maintenu tout au long du test.

Les catalyseurs B et E ont subit, préalablement au test, les étapes de préparation suivantes :
- 100 g de catalyseur ont été mis en solution dans 450 ml d'eau distillé. 0,64 g de dichlorure d'étain ont été ajoutés à la solution en présence d'acide chlorhydrique. La suspension a été laissée sous agitation pendent 4 heures.
- Le catalyseur a été séché, puis à nouveau mis en solution dans 100 ml d'eau distillée dont le pH a été ajusté à 1,3 par ajout d'acide nitrique contenant 3,45 g de nitrate de lithium. La suspension a été laissée sous agitation pendant 3 heures.
- Les catalyseurs ont été séchés à 100 °C pendant 2 heures sous air
- Le catalyseur B est ensuite traité sous hydrogène à 100°C, le catalyseur E est traité sous hydrogène à 550°C.

Les performances catalytiques mesurées après 100 heures de fonctionnement sont reportées dans le Tableau 4 ci-dessous.

**Tableau 4 : Activités et sélectivités mesurées en deshydrogénation des paraffines**

| | Catalyseur B | Catalyseur E |
|---|---|---|
| Conversion des n-paraffines C10-C14 (%) | 8,37 | 8,0 |
| Rendement en oléfines C10-C14 (%) | 7,7 | 7,10 |
| Rendement en aromatiques C10-C14 (%) | 0,12 | 0,28 |
| Rendement en dioléfines C10-C14 (%) | 0,26 | 0,25 |
| Rendement en iso paraffines C10-C14 (%) | 0,20 | 0,22 |
| Rendement autres produits C10- et C14+ (%) | 0,09 | 0,15 |

A iso-conversion des paraffines C10 à C14, le catalyseur B, dont les particules métalliques présentent un facteur de forme moyen, F, égal à 0,50 permet d'obtenir un rendement en oléfines supérieur et un rendement en aromatiques inférieur à ceux obtenus avec le catalyseur E qui présente des particules métalliques isotropes.

### Exemple 14 : Test catalytique en oxydation sélective du monoxyde de carbone

La réaction d'oxydation sélective du monoxyde de carbone a été réalisée dans un réacteur à lit traversé, à pression atmosphérique, à des températures comprises entre 70 et 130 °C. Le mélange réactionnel CO:H2:O2:He comportait 2 % en poids de monoxyde de carbone et 50 % en poids de H2, avec un rapport CO/O2 de 3. Les performances catalytiques sont données tableau 5 ci-dessous.

**Tableau 5 : Activités mesurées en oxydation sélective du monoxyde de carbone à 100°C**

| | Catalyseur B | Catalyseur E |
|---|---|---|
| Conversion CO (%) | 100 | 100 |
| Sélectivité O2 (%) | 48 | 40 |

La sélectivité mesurée pour la conversion de l'oxygène du catalyseur B, dont les particules métalliques présentent un facteur de forme moyen F égal à 0,50, est supérieure à celle mesurée pour le catalyseur E qui présente des particules métalliques isotropes.

### Exemple 15 : Test en capacité de stockage d'hydrogène

Le test de capacité de stockage d'hydrogène a été réalisé sur une thermobalance sous pression Rubotherm, permettant de suivre les cinétiques d'absorption en hydrogène dans un domaine de température compris entre 20 et 1000°C et de pression compris entre 1 et 50 bars. Le catalyseur testé a été mis en place dans la nacelle de mesure, le réacteur a été ensuite purgé par mise sous vide et balayage d'hydrogène puis mis sous pression d'hydrogène. Les cycles thermiques ont ensuite été réalisés pour déterminer les cinétiques d'adsorption (hydruration) et de désorption (décomposition) d'hydrogène.

**Tableau 6 : Capacités de stockage d'hydrogène pour T = 150°C, PH2 = 0.1MPa**

| | Catalyseur A | catalyseur D |
|---|---|---|
| Capacité stockage H2 (% poids) | 0,62 | 0,40 |

La capacité d'adsorption d'hydrogène mesurée pour le catalyseur A dont les particules métalliques présentent un facteur de forme égal à 0,54 est supérieure à la capacité d'adsorption d'hydrogène mesurée pour le catalyseur D dont les particules métalliques présentent un facteur de forma égal à 1.

## Revendications

1. Procédé de préparation de nanoparticules métalliques anisotropes ayant une taille moyenne comprise entre 10 et 500 nm et présentant un facteur de forme F inférieur à 0,7, ledit procédé comportant la mise en oeuvre de 2 réducteurs différents sur une source d'au moins un métal choisi dans les colonnes 8, 9 ou 10 de la classification périodique des éléments, le réducteur R1 présentant un pouvoir réducteur supérieur ou réducteur R2, procédé comportant au moins :
a) l'une des étapes suivantes
a1) imprégnation d'un support par une solution aqueuse comprenant une source d'au moins un métal choisi dans les colonnes 8, 9 ou 10 de la classification périodique des éléments, puis mise en contact dudit support avec un réducteur R1, ou
a2) mise en contact d'une solution aqueuse comprenant une source d'au moins un métal choisi dans les colonnes 8, 9 ou 10 avec un réducteur R1,
b) une étape de formation des nanoparticules métalliques anisotropes par contact de la solution ou du support obtenu à l'étape a) avec un réducteur R2 différent du réducteur R1
c) dans l'hypothèse où l'étape a) est l'étape a2), éventuel dépôt des nanoparticules métalliques anisotropes sur un support,
procédé dans lequel l'étape b) est réalisée après l'étape a), dans un procédé dit "deux étapes", en introduisant le réducteur R2 après formation de germes de nanoparticules métalliques.

2. Procédé selon la revendication 1, dans lequel le métal est choisi parmi le nickel, le cobalt, le fer, le ruthénium, la platine, le palladium, l'iridium.

3. Procédé selon la revendication 2 dans lequel le métal est choisi dans le groupe formé par le cobalt, le nickel, le palladium, le platine.

4. Procédé selon l'une des revendications précédentes, dans lequel le réducteur R1 est choisi dans le groupe constitué par :
- l'hydrogène, l'hydrazine, les hydroxylamines, les hydrures et borohydrures, et le réducteur R2 est choisi dans le groupe constitué par
- les acides carboxyliques, alcools, polyols, aldéhydes, cétones et leurs ions.

5. Procédé selon l'une des revendications précédentes, dans lequel, lors de l'étape b) on ajoute une base

6. Procédé selon l'une des revendications précédentes, dans lequel, lors de l'étape b), on ajoute un sel inorganique

7. Procédé selon la revendication 6 dans lequel le sel inorganique est choisi dans le groupe constitué par les halogénures d'alcalins et les alcalino-terreux.

8. Procédé selon l'une des revendications précédentes, dans lequel on ajoute un agent de stabilisation à au moins l'une des solutions en contact avec R1 ou R2.

9. Procédé selon la revendication 8, dans lequel l'agent de stabilisation est un surfactant ou un agent complexant.

10. Procédé selon l'une des revendications 8 ou 9, dans lequel on fait :
- les dissolutions séparées de l'agent de stabilisation, d'une part, et de la source de métal, d'autre part,
- suivies du mélange d'au moins une portion de l'agent de stabilisation dissout et d'au moins une portion de la source de métal dissoute.

11. Procédé selon l'une des revendications précédentes, dans lequel le catalyseur obtenu comporte un support, ledit support est un oxyde de texture non ordonnée.

12. Procédé selon la revendication 11, dans lequel le support est choisi dans le groupe constitué par l'alumine, la silice.

13. Procédé selon l'une quelconque des revendications précédentes, dans lequel, après l'étape b) ou c) on introduit dans le support par imprégnation au moins un élément choisi parmi :
- les éléments de la colonne 13 de la classification périodique,
- les éléments de la colonne 14 de la classification périodique,
- les métaux alcalins, de préférence le lithium, le sodium ou le potassium, et/ou les alcalino-terreux, de préférence le magnésium, le calcium, le strontium ou le baryum, et/ou
- les halogènes
- les éléments de la colonne 11 de la classification périodique

14. Procédé selon l'une quelconque des revendications précédentes, dans lequel au moins 50% des nanoparticules métalliques est sous forme de nanoparticules métalliques anisotropes.

15. Procédé selon l'une des revendications précédentes dans lequel la nanoparticule métallique anisotrope comporte un seul étament métallique.

16. Procédé selon l'une des revendications précédentes dans lequel le support contenant les nanoparticules métalliques anisotropes obtenues à l'issue des étapes a1 + b) ou c) est séparé du liquide , séché à une température inférieure ou égale à 120°C.

17. Procédé selon la revendication 16 dans lequel le support est soumis à un traitement d'activation sous hydrogène à une température inférieure à 600°C.

18. Procédé selon l'une des revendications 1 à 15 dans lequel les nanoparticules métalliques anisotropes obtenues à l'issue de l'étape b) sont séparées du liquide et éventuellement séchées.

19. Procédé selon la revendication 18 dans lequel les nanoparticules métalliques anisotropes solides obtenues sont soumises à un traitement d'activation sous hydrogène à une température inférieur à 600°C.

20. Procédé selon l'une des revendications 1 à 15 dans lequel la suspension obtenue à l'issue de l'étape a2)+b) du procédé est soumise à un traitement d'activation sous hydrogène à une température inférieure à 800°C.

21. Procédé selon la revendication 19 dans lequel les nanoparticules métalliques anisotropes obtenues sont remises en suspension.

22. Procédé selon la revendication 21 dans lequel la suspension soumise à un traitement d'activation sous hydrogène à une température intérieure à 600°C.

23. Utilisation comme catalyseur du matériau solide comprenant un support et des nanoparticules métalliques anisotropes obtenues par le procédé selon l'une des revendications 16 ou 17.

24. Utilisation comme catalyseur d'une la suspension obtenue à l'issue des a2)+ b) du procédé selon l'une des revendications 1 à 15 ou par le procédé selon les revendications 20 à 22.

25. Utilisation comme catalyseur des nanoparticules métalliques anisotropes solides obtenues par le procédé selon l'une des revendications 18 à 19.

26. Procédé de séparation ou d'adsorption de molécules utilisant le matériau obtenu par le procédé selon l'une des revendications 1 à 22.

27. Procédé de reformage catalytique des hydrocarbures utilisant comme catalyseur le matériau obtenu par le procédé selon rune des revendications 1 à 22.

28. Procédé d'hydrogénation totale ou sélective utilisant comme catalyseur le matériau obtenu par le procédé selon l'une des revendications 1 à 22.

29. Procédé de déshydrocyclisation utilisant comme catalyseur le matériau obtenu par le procédé selon l'une des revendications 1 à 22.

30. Procédé de déshydrogénation des hydrocarbures utilisant comme catalyseur le matériau obtenu par le procédé selon l'une des revendications 1 à 22.

31. Procédé de synthèse Fischer-Tropsch utilisant comme catalyseur le matériau obtenu par le procédé selon l'une des revendications 1 à 22.

32. procédé d' oxydation totale ou sélective du monoxyde de carbone utilisant comme catalyseur le matériau obtenu par le procédé selon l'une des revendications 1 à 22.

33. Procédé de stockage de gaz utilisant comme catalyseur la matériau obtenu par le procédé selon l'une des revendications 1 à 22.

## Claims

1. A process for preparing anisotropic metallic nanoparticles having a mean size in the range 10-500 nm and with a mean form factor F of less than 0.7, said process comprising using two different reducing agents on a source of at least one metal selected from columns 8, 9 or 10 of the periodic table of the elements, the reducing agent R1 having a higher reducing power than reducing agent R2, said process comprising at least:
a) one of the following steps:
a1) impregnating a support with an aqueous solution comprising a source of at least one metal selected from columns 8, 9 or 10 of the periodic table of the elements, then bringing said support into contact with a reducing agent R1; or
a2) bringing an aqueous solution comprising a source of at least one metal selected from columns 8, 9 or 10 into contact with a reducing agent R1;
b) a step for forming anisotropic metallic nanoparticles by bringing the solution or support obtained in step a) into contact with a reducing agent R2 which is different from R1;
c) if step a) is step a2), optionally depositing the anisotropic metallic nanoparticles onto a support,
process in which step b) is carried out after step a), in a "two-step" process by introducing the reducing agent R2 after forming seeds of metallic nanoparticles.

2. A process according to one claim 1, in which the metal is selected from nickel, cobalt, iron, ruthenium, platinum, palladium and iridium.

3. A process according to claim 2, in which the metal is selected from the group formed by cobalt, nickel, palladium and platinum.

4. A process according to one of the preceding claims, in which the reducing agent R1 is its selected from the group constituted by;
- hydrogen, hydrazine, hydroxylamines, hydrides and borohydrides
and the reducing agent R2 is selected from the group constituted by :
- carboxylic acids, alcohols, polyols, aldehydes, ketones and their ions.

5. A process according to one of the preceding claims, in which a base is added during step b)

6. A process according to one of the preceding claims, in which an inorganic salt is added during step b).

7. A process according to claim 6, in which the inorganic salt is selected from the group constituted by alkali and alkaline-earth halides.

8. A process according to one of the preceding claims, in which a stabilizing agent is added to at least one of the solutions in contact with R1 or R2.

9. A process according to claim 8, in which the stabilizing agent is a surfactant or a complexing agent.

10. A process according to claim 8 or claim 9, in which:
• the stabilizing agent and the source of the metal are dissolved separately;
• followed by mixing at least a portion of the dissolved stabilizing agent and at least a portion of the dissolved metal source.

11. A process according to one of the preceding claims, in which the catalyst obtained includes a support, said support being an oxide with a texture which is not ordered.

12. A process according to claim 11, in which the support is selected from the group constituted by alumina and silica.

13. A process according to any one of the preceding claims in which, after step b) or c), at least one element selected from the following is introduced into the support by impregnation:
• elements from column 13 of the periodic table of the elements;
• elements from column 14 of the periodic table of the elements;
• alkali metals, preferably lithium, sodium or potassium, and/or alkaline-earths, preferably magnesium, calcium, strontium or barium; and/or
• halogens;
• elements from column 11 of the periodic table of the elements.

14. A process according to any one of the preceding claims, in which at least 50% of the metallic nanoparticles is in the form of anisotropic metallic nanoparticles.

15. A process according to any one of the preceding claims, in which the anisotropic metallic particle comprises a single metallic element.

16. A process according to any one of the preceding claims, in which the support containing the anisotropic metallic nanoparticles obtained at the end of steps a1)+b) or c) is separated from the liquid, dried at a temperature of 120°C or less.

17. A process according to claim 16, in which the support undergoes an activation treatment in hydrogen at a temperature of less than 600°C.

18. A process according to one of claims 1 to 15, in which the anisotropic metallic nanoparticles obtained at the end of step b) are separated from the liquid and optionally dried.

19. A process according to claim 18, in which the solid anisotropic metallic nanoparticles obtained undergo an activation treatment in hydrogen at a temperature of less than 600°C.

20. A process according to one of claims 1 to 15, in which the suspension obtained at the end of step a2)+b) of the process undergoes an activation treatment in hydrogen at a temperature of less than 800°C.

21. A process according to claim 19, in which the anisotropic metallic nanoparticles obtained are taken up into suspension.

22. A process according to claim 21, in which the suspension undergoes an activation treatment in hydrogen at a temperature of less than 600°C.

23. Use, as a catalyst, of a solid material comprising a support and anisotropic metallic nanoparticles obtained by a process according to claim 16 or claim 17.

24. Use, as a catalyst, of a suspension obtained at the end of steps a2)+b) of the process according to one of claims 1 to 15 or by the process according to claims 20 to 22.

25. Use, as a catalyst, of solid anisotropic metallic nanoparticles obtained by the process according to one of the claims 18 to 19.

26. A process for separation or adsorption of molecules using the material obtained by the process according to one of claims 1 to 22.

27. A catalytic hydrocarbon reforming process using as catalyst the material obtained by the process according to one of claims 1 to 22 .

28. A process for the total or selective hydrogenation using the material obtained by the process according to one of claims 1 to 22 .

29. A process for dehydrocylization using the material obtained by the process according to one of claims 1 to 22.

30. A process for hydrocarbon dehydrogenation using as catalyst the material obtained by the process according to one of claims 1 to 22.

31. A Fischer-Tropsch synthesis process using as catalyst the material obtained by the process according to one of claims 1 to 22.

32. A process for the total or selective oxidation of carbon monoxide using as catalyst the material obtained by the process according to one of claims 1 to 22.

33. A process for storing gas, using as catalyst the material obtained by the process according to one of claims 1 to 22.

## Patentansprüche

1. Verfahren zur Herstellung von anisotropen, metallischen Nanopartikeln mit einer durchschnittlichen Größe im Bereich zwischen 10 und 500 nm, die einen Formfaktor F kleiner als 0,7 aufweisen, wobei das Verfahren den Einsatz von zwei verschiedenen Reduktionsmitteln an einer Quelle aus mindestens einem Metall umfassten, das aus den Spalten 8, 9 oder 10 des Periodensystems der Elemente ausgewählt ist, wobei das Reduktionsmittel R1 eine größere Reduktionskraft aufweist als das Reduktionsmittel R2, wobei das Verfahren mindestens
a) einen der folgenden Schritte umfasst:
a1) Imprägnieren eines Trägers mit einer wässrigen Lösung, die eine Quelle aus mindestens einem Metall umfasst, das aus den Spalten 8, 9 oder 10 des Periodensystems der Elemente ausgewählt ist, dann Inkontaktbringen des Trägers mit einem Reduktionsmittel R1, oder
a2) Inkontaktbringen einer wässrigen Lösung, die eine Quelle aus mindestens einem Metall umfasst, das aus den Spalten 8, 9 oder 10 ausgewählt ist, mit einem Reduktionsmittel R1,
b) einen Schritt zum Bilden der anisotropen, metallischen Nanopartikel durch Kontakt der Lösung oder des in Schritt a) erhaltenen Trägers mit einem Reduktionsmittel R2, das verschieden von Reduktionsmittel R1 ist,
c) unter der Voraussetzung, dass Schritt a) Schritt a2) ist, gegebenenfalls Abscheiden der anisotropen, metallischen Nanopartikel auf einem Träger.
Verfahren, bei dem Schritt b) nach Schritt a) in einem sogenannten "Zweischrittverfahren" ausgeführt wird, indem das Reduktionsmittel R2 nach der Bildung von Keimen metallischer Nanopartikel eingeführt wird.

2. Verfahren nach Anspruch 1, bei dem das Metall aus Nickel, Cobalt, Eisen, Ruthenium, Platin, Palladium, Iridium ausgewählt ist.

3. Verfahren nach Anspruch 2, bei dem das Metall aus der Gruppe gebildet aus Cobalt, Nickel, Palladium, Platin ausgewählt ist.

4. Verfahren nach einem der vorhergehenden Ansprüche, bei dem das Reduktionsmittel R1 aus der Gruppe ausgewählt ist, gebildet aus:
- Wasserstoff, Hydrazin, Hydroxylaminen, Hydriden und Borhydriden und das Reduktionsmittel R2 aus der Gruppe ausgewählt ist, bestehend aus:
- Carbonsäuren, Alkoholen, Polyolen, Aldehyden, Ketonen und deren lonen.

5. Verfahren nach einem der vorhergehenden Ansprüche, bei dem in Schritt b) eine Base zugegeben wird.

6. Verfahren nach einem der vorhergehenden Ansprüche, bei dem in Schritt b) ein anorganisches Salz zugegeben wird.

7. Verfahren nach Anspruch 6, bei dem das anorganische Salz ausgewählt ist aus der Gruppe bestehend aus den alkalischen und erdalkalischen Halogeniden.

8. Verfahren nach einem der vorhergehenden Ansprüche, bei dem mindestens einer der Lösungen, die in Kontakt mit R1 oder R2 sind, ein Stabilisierungsmittel zugegeben wird.

9. Verfahren nach Anspruch 8, bei dem das Stabilisierungsmittel ein Tensid oder ein Komplexbildner ist.

10. Verfahren nach einem der Ansprüche 8 oder 9, bei dem:
- das Stabilisierungsmittels einerseits und die Metallquelle andererseits getrennt aufgelöst werden,
- worauf das Mischen mindestens eines Teils des gelösten Stabilisierungsmittels mit mindestens einem Teil der gelösten Metallquelle folgt.

11. Verfahren nach einem der vorhergehenden Ansprüche, bei dem der erhaltene Katalysator einen Träger umfasst, wobei der Träger ein Oxid mit ungeordneter Textur ist.

12. Verfahren nach Anspruch 11, bei dem der Träger aus der Gruppe bestehend aus Aluminiumoxid und Siliciumdioxid ausgewählt ist.

13. Verfahren nach irgendeinem der vorhergehenden Ansprüche, bei dem nach Schritt b) oder c) durch Imprägnieren in den Träger mindestens ein Element eingeführt wird, das ausgewählt ist aus:
- den Elementen der Spalte 13 des Periodensystems,
- den Elementen der Spalte 14 des Periodensystems,
- den alkalischen Metallen, bevorzugt Lithium, Natrium oder Kalium, und/oder den alkalischen Erden, bevorzugt Magnesium, Calcium, Strontium oder Barium, und/oder
- den Halogenen
- den Elementen der Spalte 11 des Periodensystems.

14. Verfahren nach irgendeinem der vorhergehenden Ansprüche, bei dem mindestens 50 % der metallischen Nanopartikel in Form anisotroper, metallischer Nanopartikel vorliegen.

15. Verfahren nach einem der vorhergehenden Ansprüche, bei dem der anisotrope, metallische Nanopartikel ein einziges Metallelement umfasst.

16. Verfahren nach einem der vorhergehenden Ansprüche, bei dem der Träger, der die anisotropen, metallischen Nanopartikel enthält, die am Ende der Schritte a1 + b) oder c) erhalten wurden, von der Flüssigkeit getrennt und bei einer Temperatur von 120 °C oder darunter getrocknet wird.

17. Verfahren nach Anspruch 16, bei dem der Träger einer Aktivierungsbehandlung unter Wasserstoff bei einer Temperatur unterhalb von 600 °C unterzogen wird.

18. Verfahren nach einem der Ansprüche 1 bis 15, bei dem die anisotropen, metallischen Nanopartikel, die am Ende von Schritt b) erhalten werden, von der Flüssigkeit getrennt und gegebenenfalls getrocknet werden.

19. Verfahren nach Anspruch 18, bei dem die erhaltenen festen, anisotropen, metallischen Nanopartikel einer Aktivierungsbehandlung unter Wasserstoff bei einer Temperatur unterhalb von 600 °C unterzogen werden.

20. Verfahren nach einem der Ansprüche 1 bis 15, bei dem die Suspension, die am Ende von Schritt a2) + b) des Verfahrens erhalten wird, einer Aktivierungsbehandlung unter Wasserstoff bei einer Temperatur unterhalb von 600 °C unterzogen wird.

21. Verfahren nach Anspruch 19, bei dem die erhaltenen anisotropen, metallischen Nanopartikel resuspendiertwerden.

22. Verfahren nach Anspruch 21, bei dem die Suspension einer Aktivierungsbehandlung unter Wasserstoff bei einer Temperatur unterhalb von 600 °C unterzogen wird.

23. Verwendung des festen Materials, das einen Träger und anisotrope, metallische Nanopartikel umfasst, die durch das Verfahren nach einem der Ansprüche 16 oder 17 erhalten werden, als Katalysator.

24. Verwendung der Suspension, die am Ende von a2) + b) des Verfahrens nach einem der Ansprüche 1 bis 15 oder des Verfahrens nach den Ansprüchen 20 bis 22 erhalten wird, als Katalysator.

25. Verwendung der festen, anisotropen, metallischen Nanopartikel, die durch das Verfahren nach einem der Ansprüche 18 bis 19 erhalten werden, als Katalysator.

26. Verfahren zum Trennen oder zum Adsorbieren von Molekülen, bei dem das Material verwendet wird, das durch das Verfahren nach einem der Ansprüche 1 bis 22 erhalten wird.

27. Verfahren zum katalytischen Reformieren von Kohlenwasserstoffen, bei dem das Material, das durch das Verfahren nach einem der Ansprüche 1 bis 22 erhalten wird, als Katalysator verwendet wird.

28. Verfahren zum vollständigen oder selektiven Hydrieren, bei dem das Material, das durch das Verfahren nach einem der Ansprüche 1 bis 22 erhalten wird, als Katalysator verwendet wird.

29. Verfahren zum Dehydrocyclisieren, bei dem das Material, das durch das Verfahren nach einem der Ansprüche 1 bis 22 erhalten wird, als Katalysator verwendet wird.

30. Verfahren zum Dehydrieren von Kohlenwasserstoffen, bei dem das Material, das durch das Verfahren nach einem der Ansprüche 1 bis 22 erhalten wird, als Katalysator verwendet wird.

31. Verfahren zur Fischer-Tropsch-Synthese, bei dem das Material, das durch das Verfahren nach einem der Ansprüche 1 bis 22 erhalten wird, als Katalysator verwendet wird.

32. Verfahren zur vollständigen oder selektiven Oxidation von Kohlenmonoxid, bei dem das Material, das durch das Verfahren nach einem der Ansprüche 1 bis 22 erhalten wird, als Katalysator verwendet wird.

33. Verfahren zum Speichern von Gas, bei dem das Material, das durch das Verfahren nach einem der Ansprüche 1 bis 22 erhalten wird, als Katalysator verwendet wird.
